# EUROPEAN PATENT APPLICATION

(11) **EP 2 946 986 A1**
(43) Date of publication of application: **25.11.2015**
(21) Application number: 15167982.6
(22) Date of filing: 18.05.2015
(51) Int. Cl.: B62D 5/04

(54) **STEERING SYSTEM WITH TILTED MOTOR AXIS**

(30) Priority: 23.05.2014 US 201414285979
(71) Applicant: Steering Solutions IP Holding Corporation, Saginaw, MI 48601 (US)
(72) Inventor: Vorwerck, Conrad G., Bay City, MI Michigan 48706 (US); Schulte, Bret T., Birch Run, MI Michigan 48415 (US)
(74) Representative: Manitz, Finsterwald & Partner GbR

(57) **Abstract**

In one exemplary embodiment of the present invention, a torque transmitting assembly is provided. The assembly includes a motor (46) having a motor shaft (50) rotatable about a first axis, a component having a housing (76) and a component shaft (32), the component shaft translatable along a second axis, and a belt (58) frictionally coupled to the motor shaft and the component shaft to transfer a force therebetween. The first axis is oriented at an angle with respect to the second axis.

## Description

### FIELD OF THE INVENTION

The following description relates to a torque transmitting assembly, and in particular, to a rack electric power steering system.

### BACKGROUND

Electrically actuated or electrically assisted steering systems, including rotary-to-linear mechanisms such as ball-screw assemblies, provide power assist to a steering assembly. For example, a nut may surround and threadably engage a screw portion of a rack such that rotation of the nut by a motor imparts axially directed force to the rack, thereby assisting the driver in steering the vehicle. A belt assembled onto the motor and nut transfers rotary motion from the motor shaft to the nut. However, tensioning of the belt during installation may cause the motor shaft to bend with respect to the rack axis, which may cause uneven belt tension resulting in accelerated belt wear.

Some known systems use larger, stiffer components at added cost to avoid unacceptable bending of the motor shaft. However, such systems may be cost prohibitive and require too much space for space-limited designs. Accordingly, it is desirable to provide an assisted steering system which reduces or eliminates belt wear and uneven belt tension without increased system size and cost.

### SUMMARY OF THE INVENTION

In one exemplary embodiment of the present invention, a torque transmitting assembly is provided. The assembly includes a motor having a motor shaft rotatable about a first axis, a component having a housing and a component shaft, the component shaft translatable along a second axis, and a belt frictionally coupled to the motor shaft and the component shaft to transfer a force therebetween. The first axis is oriented at an angle with respect to the second axis.

In another exemplary embodiment of the present invention, a steering system is provided. The steering system includes a motor having a shaft rotatable about a first axis, a rack housing having a rack therein translatable along a second axis, and a belt frictionally coupled to the shaft and the rack to transfer a force therebetween. The first axis is oriented at an angle with respect to the second axis.

In yet another exemplary embodiment of the present invention, a method of assembling a steering system is provided. The method includes providing a motor having a shaft rotatable about a first axis, providing a rack housing having a rack therein translatable along a second axis, and providing a belt to frictionally couple the shaft and the rack to transfer a force therebetween. The method further includes determining an angle that the shaft will deflect when the belt is tensioned to a predetermined tension, and orienting the motor such that the first axis is oriented with respect to the second axis at the determined angle.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a steering system according to an exemplary embodiment of the present invention;
FIG. 2 is a schematic illustration of a portion of the steering system shown in FIG. 1; and
FIG. 3 is a cross-sectional view of an exemplary electric power steering system that may be used with the steering system shown in FIG. 1.

### DETAILED DESCRIPTION

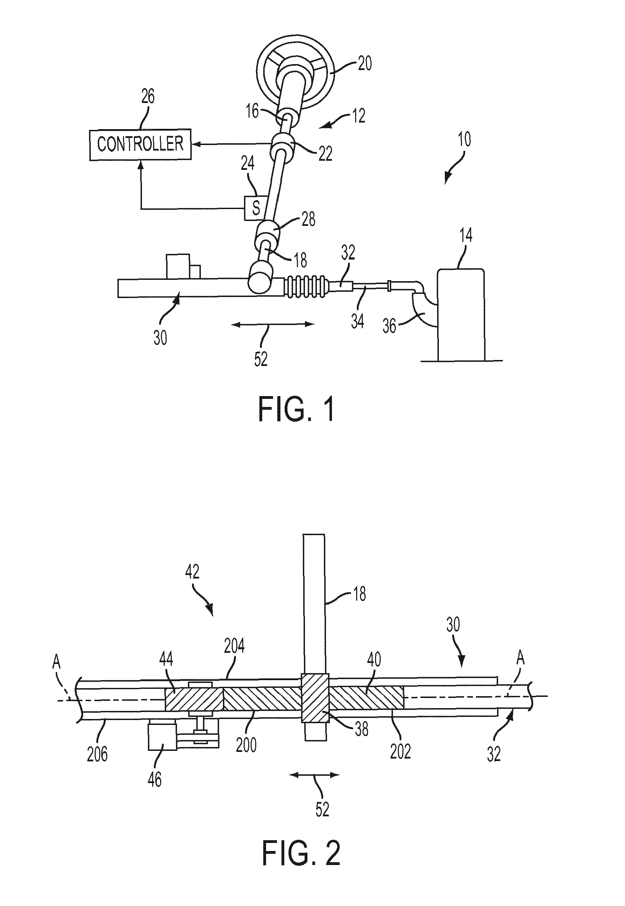

Referring now to the Figures, where the invention will be described with reference to specific embodiments, without limiting same, FIGS. 1 and 2 illustrate an electric power steering (EPS) system 10 for use in a vehicle (not shown). Steering system 10 allows the operator of the vehicle to control the direction of the vehicle through the manipulation of a steering column 12, which is mechanically connected to road wheels 14 (only one shown).

Steering column 12 includes an upper steering shaft 16 and a lower steering shaft 18. A hand wheel 20 is disposed at upper steering shaft 16 and is positioned so that the operator can apply a rotational force to steering column 12. A torque sensor 22 and a position sensor 24 are located at upper steering column shaft 16 to detect the turning angle of hand wheel 20. In the exemplary embodiment, torque sensor 22 and position sensor 24 are in electronic communication with a controller 26. A column universal joint 28 couples upper steering column shaft 16 to lower steering column shaft 18, which is secured at one end to column universal joint 28, and to a steering gear assembly 30 at the other end. Gear assembly 30 includes an elongate rack 32 having longitudinal axis 'A' along which it linearly translates. The opposed axial ends of rack 32 are coupled to the vehicle's road wheels 14 through steering linkage that includes tie rods 34 (only one shown) each secured to rack 32 at one end, and to one of a pair of steering knuckles 36 (only one shown) at the other end.

Steering gear assembly 30 further includes a pinion gear 38 in mechanical connection with rack 32. Pinion gear 38 is positioned to make contact with a matching toothed portion 40 of rack 32 that extends along a segment of rack 32. Pinion gear 38 has teeth that are engaged with teeth of matching toothed portion 40. Pinion gear 38, in combination with matching toothed portion 40, form a rack and pinion gear set 42. Rack 32 also includes an axially extending segment along which is provided generally cylindrical ball screw portion 44 centered about axis 'A'. Toothed portion 40 and ball screw portion 44 are integrated into rack 32, and ball screw 44 is in mechanical communication with a reversible servomotor 46. Ball screw 44 and motor 46 may be located axially along rack 32 on either first side 200 or opposite second side 202 of toothed portion 40. In addition, motor 46 may be located radially either on top side 204 or bottom side 206 of rack 32. Actuation of motor 46 is controlled by controller 26.

When the vehicle operator turns hand wheel 20, a rotational force is applied to steering column 12 and pinion gear 38 is accordingly rotated. The movement of pinion gear 38 causes axial movement of rack 32 in the direction of arrows 52, which in turn manipulates tie rods 34 and knuckles 36 in order to reposition road wheels 14. Accordingly, when hand wheel 20 is turned, pinion gear 38 and matching tooth portion 40 convert rotary motion of hand wheel 20 into linear motion of rack 32. In order to assist the operator-applied force to steering system 10, motor 46 is energized and provides power assist to the movement of rack 32 through ball screw 44, thereby aiding in the steering of the vehicle.

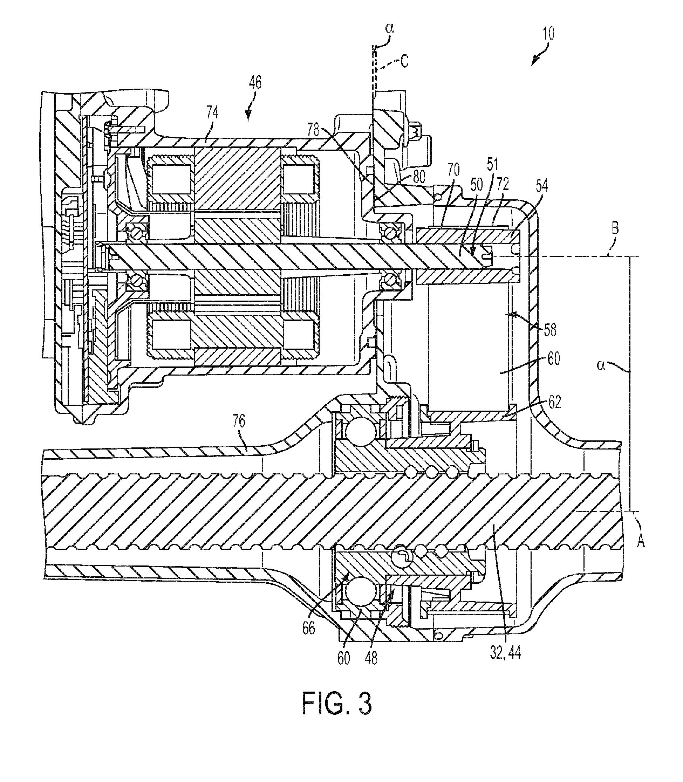

Referring to FIG. 3, an exemplary embodiment of steering system 10 is illustrated. Motor 46 is in operable communication with ball screw 44 through a ball nut assembly 48 rotatably disposed about ball screw 44. A shaft 50 having an axis 'B' extends from motor 46 and is rotated in one of two opposite angular directions when motor 46 is energized. A driving pulley 54 is rotatably fixed to shaft 50. A flexible, endless drive belt 58 is wrapped around driving pulley 54 such that a belt inner surface 60 is in frictional contact with pulley 54. Belt 58 also wraps around a driven pulley 62 defining the outer circumference of ball nut assembly 48 such that belt inner surface 60 is in frictional contact with driven pulley 62. Driven pulley 62 is radially centered about axis 'A' and includes the radially outer surface of a generally cylindrical ball nut 66. When motor 46 is actuated, movement of belt 58 linking pulleys 54 and 62 causes ball nut 66 to rotate about axis 'A' and ball screw 44 to translate rack 32.

Typically, shaft 50 is oriented in parallel with rack 32 (i.e., rack axis 'A' and shaft axis 'B' are parallel). In some situations, belt 58 is tensioned during installation, for example, to prevent belt skip (i.e., when a belt jumps a tooth on the pulley). Such tensioning may skew or slant motor shaft 50 and/or rack 32 (and their associated components) toward each other, thereby causing shaft 50 and/or rack 32 to slant and such that the shaft and/or rack axis is no longer parallel to the original shaft and/or rack axis before the tensioning. Due to such slanting, tension at a first edge 70 of belt 58 will be unequal to the tension at a second edge 72 of belt 58, which may cause accelerated belt wear.

However, in the exemplary embodiment shown in FIG. 3, a housing 74 of motor 46 is oriented angularly with respect to a rack housing 76 such that motor shaft axis 'B' is oriented at an angle 'α' with respect to rack axis 'A'. When belt 58 is subsequently installed over pulleys 54, 62 and tensioned as described above, the cantilevered end 51 of motor shaft 50 is deflected, bent, or slanted bend (elastically or plastically) into parallel alignment with rack 32. As such, the tension at first and second belt edges 70, 72 is equal or substantially equal, thereby facilitating reducing or preventing accelerated belt wear. In addition, tilted motor 46 may account for any angle deviation due to bearing lash, manufacturing tolerance in the bearing bore, and dimensional stackup.

In the exemplary embodiment, angle 'α' is between an angle greater 0° and 2°. In another embodiment, angle 'α' is between an angle greater than approximately 0° and approximately 2°. In other embodiments, angle 'α' is between an angle greater than 0° and 1°, between an angle greater than approximately 0° and approximately 1°, between ¼° and ¾°, or between approximately ¼° and approximately ¾°. However, angle 'α' may be variable depending on the tension force, and motor shaft axis 'B' may be oriented at any suitable angle with respect to rack axis 'A' that enables system 10 to function as described herein when belt 58 is tensioned.

As shown in FIG. 3, rack housing 76 includes a motor receiving surface 78, and motor housing 74 includes a front surface 80 configured to position against motor receiving surface 78. In the exemplary embodiment, motor receiving surface 78 is oriented at an angle 'α' with respect to an axis 'C' that is orthogonal to rack axis 'A' or is substantially orthogonal to rack axis 'A', thereby causing motor shaft axis 'B' to be oriented at angle 'α' with respect to rack axis 'A'. Alternatively, motor housing front surface 80 may be oriented at angle 'α' with respect to axis 'C', or an insert (not shown) may be positioned between motor receiving surface 78 and front surface 80 to orient axis 'B' at angle 'α' with respect to axis 'A'.

In the exemplary embodiment, angle 'α' may be determined by first determining the angle at which motor shaft 50 and/or rack 32 will be deflected or slanted due to a predetermined tensioning of belt 58 when motor shaft 50 and rack 32 are oriented in parallel. For example, the distance of driving pulley 54 from the nearest motor bearing 82 and the width of driving pulley 54 may facilitate determining where a tension force is applied in relation to its support when belt 58 is installed. The magnitude and location of the force may then facilitate determining tilt angle 'α' of motor shaft 50 when that force is applied. Motor receiving surface 78 and/or front surface 80 may then be formed (e.g., machined) to orient shaft axis 'B' at angle 'α' with respect to rack axis 'A' to fully or substantially take-up the angle of deflection caused by the tensioning. As such, after tensioning, belt 58 rotates about a shaft axis 'B' that is parallel or substantially parallel to rack axis 'A'.

A method of assembling a system 10 includes providing rack housing 76 having rack 32 extending along rack axis 'A', providing motor 46 having shaft 50 extending along shaft axis 'B', and coupling motor 46 to rack housing 76 such that shaft axis 'B' is not parallel to rack axis 'A'. The method may further include forming at least one of motor receiving surface 78 and front surface 80 to be oriented at an angle 'α' with respect to axis 'C' such that shaft axis 'B' is oriented at angle 'α' with respect to rack axis 'A'.

Described herein are systems and methods providing an EPS motor tilted or angled with respect to a rack axis to facilitate even distribution of tension across a belt transferring torque between the motor and a rack. The angle of tilt may be varied depending on the belt tension required to prevent belt skip or other conditions when the belt is installed. The motor mounting face may then be tilted by the same angle that the motor shaft bends under load, but in the opposite direction. When the load is applied, the motor shaft bends to be parallel or substantially parallel to the rack axis. As such, tension is evenly distributed across the width of the belt, thereby reducing belt wear.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description.

## Claims

1. A steering system comprising:
a motor having a shaft rotatable about a first axis;
a rack housing having a rack therein translatable along a second axis; and
a belt frictionally coupled to the shaft and the rack to transfer a force therebetween, wherein the first axis is oriented at an angle with respect to the second axis.

2. The steering system of claim 1, wherein the motor shaft includes a main portion and a cantilevered end portion, the main portion oriented along the first axis, the cantilevered end portion configured to deviate from the first axis at an angle relative to the first axis once the belt is frictionally coupled to the motor shaft.

3. The steering system of claim 1, further comprising a pulley coupled to the shaft between the shaft and the belt.

4. The steering system of claim 1, further comprising a ball nut operatively coupled to the rack.

5. The steering system of claim 4, further comprising a pulley coupled to the ball nut, wherein the belt is frictionally coupled to the pulley to transfer the force to the rack.

6. The steering system of claim 1, wherein the angle is between an angle greater than 0° and 1°.

7. The steering system of claim 1, wherein the angle is between ¼° and ¾°.

8. The steering system of claim 1, wherein the rack housing includes a motor receiving surface, the motor coupled to the motor receiving surface, and wherein the motor receiving surface is oriented at the angle with respect to a third axis that is orthogonal to the second axis.

9. The steering system of claim 1, wherein the motor comprises a motor housing having a front surface coupled to the rack housing, and wherein the motor housing front surface is oriented at the angle with respect to a third axis that is orthogonal to the second axis.

10. A method of assembling a steering system, the method comprising:
providing a motor having a shaft rotatable about a first axis;
providing a rack housing having a rack therein translatable along a second axis;
providing a belt to frictionally couple the shaft and the rack to transfer a force therebetween;
determining an angle that the shaft will deflect when the belt is tensioned to a predetermined tension;
orienting the motor such that the first axis is oriented with respect to the second axis at the determined angle.

11. The method of claim 10, further comprising coupling a pulley to the shaft between the shaft and the belt.

12. The method of claim 10, further comprising operatively coupling a ball nut to the rack and coupling a pulley to the ball nut between the ball nut and the belt, wherein the belt is frictionally coupled to the pulley to transfer the force to the rack.

13. The method of claim 10, further comprising frictionally coupling the belt to the shaft such that a main portion of the shaft is oriented along the first axis, and a cantilevered end portion of the shaft deviates from the first axis at an angle relative to the first axis.

14. The method of claim 10, wherein the step of orienting the motor comprises:
forming a motor receiving surface of the rack housing such that the motor receiving surface is oriented at the determined angle with respect to a third axis that is orthogonal to the second axis; and
coupling the motor to the motor receiving surface such that the first axis is oriented with respect to the second axis at the determined angle.

15. The method of claim 10, wherein the step of orienting the motor comprises:
providing the motor with a motor housing having a front surface;
forming the front surface such that the front surface is oriented at the determined angle with respect to a third axis that is orthogonal to the second axis; and
coupling the motor front surface to the rack housing such that the first axis is oriented with respect to the second axis at the determined angle.
